# EUROPEAN PATENT APPLICATION

(11) **EP 2 426 261 A1**
(43) Date of publication of application: **07.03.2012**
(21) Application number: 11179680.1
(22) Date of filing: 01.09.2011
(51) Int. Cl.: E01H 1/08, F24J 2/46, E01H 1/00

(54) **A vehicle for cleaning inclined surfaces**

(30) Priority: 01.09.2010 IT PC20100018
(71) Applicant: F.I.M.I.S. Srl., 29027 Podenzano (PC) (IT)
(72) Inventor: Fedeli, Gian Carlo, 29027 Podenzano (PC) (IT)
(74) Representative: Fisauli, Beatrice A. M.

(57) **Abstract**

A vehicle for cleaning inclined surfaces, in particular surfaces substantially flat and inclined in relation to the ground, such as solar panels of ground-mounted systems, comprising a motor-driven frame (2), mounted on which is at least one tank (4,7) containing a washing liquid, means (5,9,30) designed to spray said liquid against the surface to be cleaned and at least one rotary brush (23) for removing the dirt mechanically, wherein said brush is mounted in the rear part of the vehicle on a support (21) with the possibility of turning about an axis (X-X) parallel to the direction of advance of the vehicle from a substantially vertical non-operative position to an operative position with an inclination comprised between said substantially vertical position and a substantially horizontal position, there being provided means (26) designed to bring said brush from said non-operative position to said operative position, and vice versa.

## Description

The present invention proposes a vehicle for cleaning inclined surfaces, and in particular surfaces substantially flat and inclined in relation to the ground.

In detail, the invention relates to a vehicle provided with cleaning means with variable inclination, capable of performing washing and cleaning operations on surfaces with different inclinations comprised between horizontal and vertical.

An advantageous, but not exclusive, example of application of the present invention relates to the cleaning of solar photovoltaic panels of ground-mounted systems.

These systems are produced in open spaces, more or less vast, which are covered with a certain number of photovoltaic panels (or modules), arranged in parallel rows, and appropriately spaced apart, to cover the whole surface area of the system.

In detail, these panels are placed on specific supporting structures designed to support them and keep them inclined in relation to the horizontal plane (which does not always coincide with the ground) by a certain angle which guarantees maximum performance of the panel (for example, in Italy the optimal inclination is approximately 30° in relation to the horizontal plane).

However, as these systems are installed in open spaces, and consequently subject to atmospheric agents, fumes from production processes, animal excrement and the like, they require regular cleaning operations.

In fact, dirt that accumulates on the transparent covering of the photovoltaic panel can cause gradual decrease of the receptivity of the panels, reducing their output with inversion effects similar to those produced by shadows.

This problem may be particularly severe in the case of industrial residues and waste material from birds, which have a considerably high level of opacity.

For these reasons, the outer covering of panels requires to be cleaned regularly, at intervals with a frequency dependent on the speed of the soiling process. Currently there are no known automatic machines available on the market capable of performing the aforesaid cleaning operations automatically, and these are therefore performed manually by operators with specific detergents that do not damage the transparent covering of the module, water, and mechanical cleaning means, such as brushes or the like, to remove the layer of dirt that accumulates.

In recent years, also as a result of policies to promote new methods of producing clean electrical energy, there has been a continual and significant increase in the number of ground-mounted photovoltaic systems of medium and large dimensions, also called "photovoltaic parks".

In these cases, where the total surface area of the panels can cover hundreds or a few thousands of square metres, the labour required to clean the photovoltaic panels becomes an in important and non-negligible aspect for the administrator of the system.

In this sector there is therefore the need for a machine capable of performing the aforesaid cleaning operations in an automatic way.

However, one problem posed in the production of a machine of this type relates to the limited spaces and inclined positioning of the panels.

In fact, the photovoltaic panels of these ground-mounted systems are placed in parallel rows spaced apart from one another in such a way as not to produce shadows on the adjacent panels.

However, these spaces are reduced to the bare minimum to make maximum use of the available surface area of the system.

Moreover, the supporting structures of the panels are never identical to one another but are produced ad hoc for each system as a function of the slope and of the type of ground, and consequently the panels are always at different heights and inclinations in relation to the ground.

In this context, the scope of the present invention is to propose a vehicle for cleaning inclined surfaces, and in particular surfaces substantially flat and inclined in relation to the ground, which overcomes the problems of prior art described above.

In particular, an object of the invention is to propose a vehicle for cleaning inclined surfaces, which allows operations to wash and clean the photovoltaic panels of ground-mounted systems to be performed automatically, eliminating or limiting the need for labour.

In detail, an object of the invention is to propose a vehicle for cleaning inclined surfaces, provided with mechanical cleaning means that allow cleaning operations to be performed on photovoltaic panels placed at different heights and with different inclinations in relation to the ground.

A further object of the present invention is to provide a vehicle for cleaning inclined surfaces which has limited lateral dimensions, which that allow easy manoeuvring in limited spaces, such as between the various rows of photovoltaic panels of ground-mounted systems.

These specified objects are substantially achieved by a vehicle for cleaning inclined surfaces comprising a motor-driven frame, mounted on which is at least one tank containing a washing liquid, means designed to spray said liquid against the surface to be cleaned and at least one rotary brush for removing the dirt mechanically, characterized in that said brush is mounted in the rear part of the vehicle on a support with the possibility of turning about an axis parallel to the direction of advance of the vehicle from a substantially vertical non-operative position to an operative position with an inclination comprised between said substantially vertical position and a substantially horizontal position, there being provided means designed to bring said brush from said non-operative position to said operative position, and vice versa.

Moreover, said support is hinged along said axis of rotation on a pair of arms fixed with respect to an upright with the possibility of translating along a substantially vertical direction.

In this way, it is possible to adapt the vehicle to wash surfaces with different heights and inclinations, and thus keep the brush in as parallel a position as possible to the surface.

In detail, said support is hinged at a bottom end thereof so that its weight and the weight of the brush facilitate rotation from said non-operative position to said operative position.

To control the position of said brush there is provided a winch, which actuates at least one pulley wound on which is a rope constrained at the end to the support of the brush.

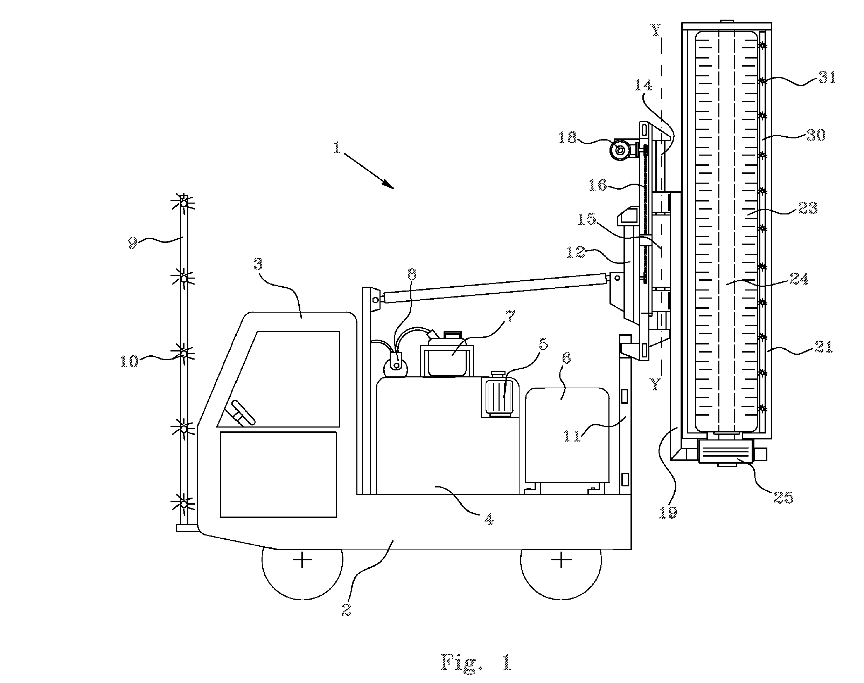

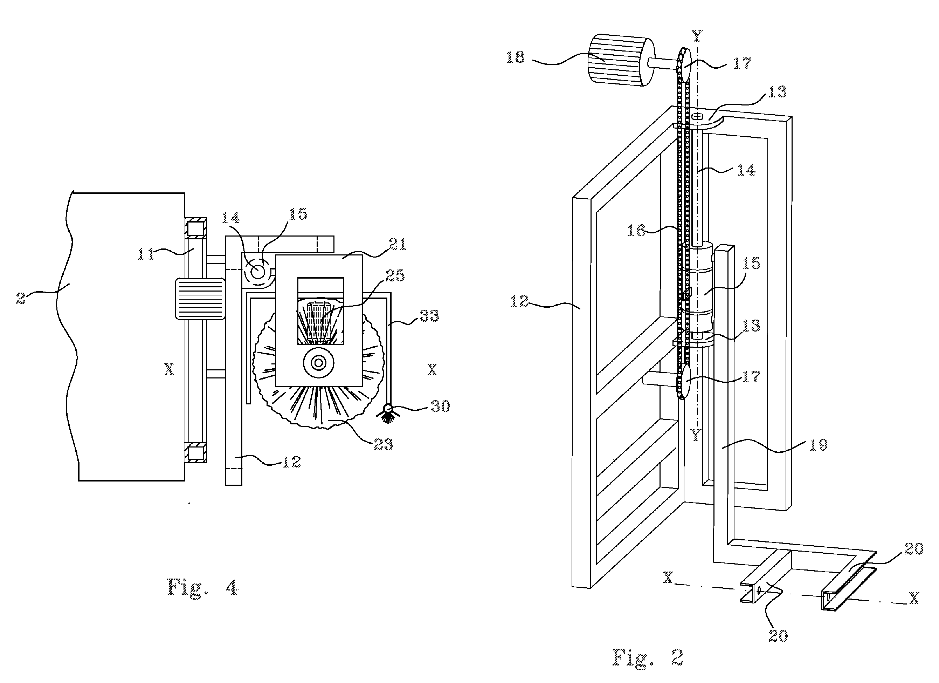

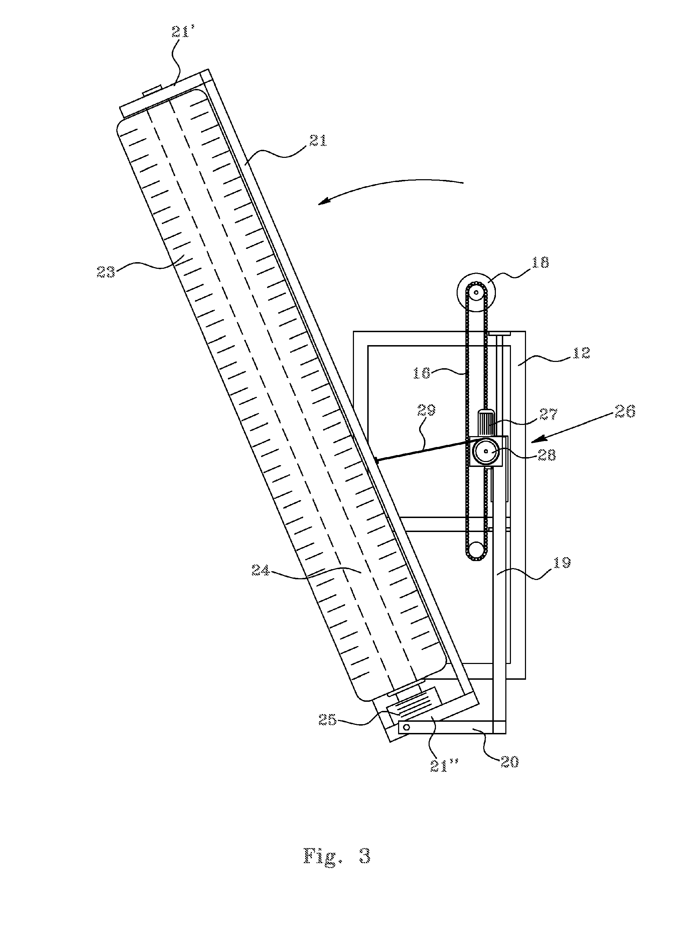

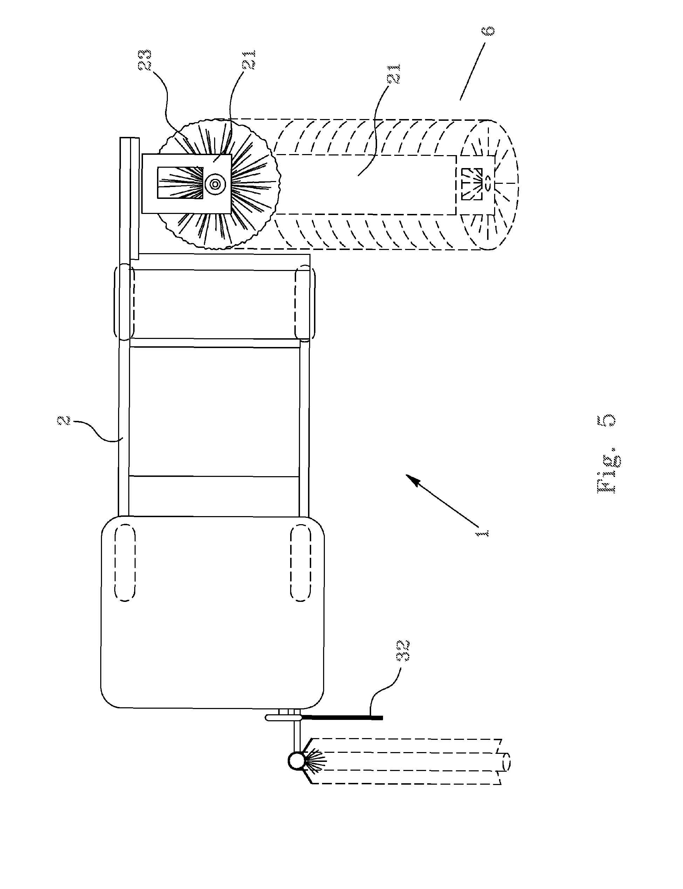

Further characteristics and advantages will be more apparent from the indicative, and therefore non-limiting, description of an example of a preferred but not exclusive embodiment of the invention, as shown in the accompanying figures wherein:
● Fig. 1 is a side view of a vehicle for washing inclined surfaces, according to the invention, with the brush in non-operative position;
● Fig. 2 is a perspective view of a detail of the rear part of the vehicle in which the brush is housed;
● Fig. 3 is a front view of the rear part of the vehicle with the brush in operative position;
● Fig. 4 is a plan view of a detail of the vehicle of the rear part of the vehicle with the brush in non-operative position;
● Fig. 5 is a plan view of the vehicle with the brush in operative position;

With reference to the accompanying Fig. 1, the vehicle, indicated in its entirety with 1, according to the invention comprises a motor-driven frame, indicated in its entirety with 2, in turn provided with a driving cab 3 to accommodate the operator driving the vehicle.

In the central part of the frame 2 there are provided at least one tank 4 for containing a washing liquid and a pump 5 designed to collect said washing liquid and to supply it under pressure to specific spray nozzles.

Preferably, the tank 4 is destined to contain water and there is provided a second tank 7 containing detergent, which is suitably dispensed by a second pump 8 to produce the washing liquid sprayed on the surface to be cleaned.

A generator 6 supplies the electrical energy required to supply the pumps and other washing devices described hereunder.

Said washing devices in detail comprise a front spraying unit (9) comprising a rod provided with a plurality of nozzles 10 to which the washing liquid is supplied under pressure by means of the pumps 5 and 8.

Said rod is preferably provided hinged in the bottom part to the frame 2, in such a way as to be able to turn about an axis parallel to the direction of advance of the vehicle.

In this way the rod can be positioned as parallel as possible to the surface to be cleaned. Control of rotation of the rod can take place manually or by means of an actuator (electric, pneumatic or the like).

At the rear of the vehicle there is instead provided a first supporting frame 11, for example, a portal structure constituted by welded metal profiles or the like, with respect to which a second frame 12 is fixed.

Said frame 12 can be fixed on the vehicle or can be mounted on guides (not shown in the figure) to translate along a direction substantially perpendicular to that of advance of the vehicle.

Fixed to said second frame 12 are a pair of plates 13 between which there is mounted a vertical stem 14 which acts as guide for a sleeve 15, which can slide on said stem 14 along a substantially vertical direction Y-Y, driven by a chain 16 (Fig.2).

Said chain 16 is in turn wound around a pair of pinions 17, mounted on the second frame 12, one of which is actuated by a gear motor 18, supplied by the generator 6.

Fixed to the sleeve 15 is an upright 19 which carries in the bottom part thereof a pair of arms 20 to which there is hinged a C-shaped support 21, with the possibility of turning about an axis (X-X) parallel to the direction of advance of the vehicle (Fig.1 and Fig.3).

On said support 21 there is then mounted a rotary brush 23 for removing the dirt mechanically from the surface to be washed.

In detail, said brush 23 has a central shaft 24 the ends of which are supported respectively by the wings 21' and 21 " of the support 21.

At the bottom wing 21" there is provided a gear motor 25, supplied by the generator 6, connected rigidly to the shaft 24 of the brush to make it rotate.

In this way the brush has the possibility of turning about the axis X-X, parallel to the direction of advance of the vehicle, from a substantially vertical non-operative position (Fig. 1) to an operative position with an inclination comprised between said substantially vertical position and a substantially horizontal position, in which it projects laterally from the vehicle (Fig. 3).

According to the invention said brush, being hinged only in the bottom part, is thus comparable to an inverted pendulum whose weight allows rotation from the aforesaid non-operative position to said operative position.

To lock and keep the brush 23 with a given desired inclination in relation to the ground, or in such a way that the brush remains substantially parallel to the surface to be cleaned, there is provided a winch system 26 connected to the support 21.

In detail, said winch system 26 comprises a gear motor 27, mounted on the upright 19, which actuates a pair of pulleys 28, wound on which are the same number of ropes 29 constrained at the end to the support 21.

In this way, as a result of the combination of the vertical movement along the direction Y-Y of the upright 19 and of the turning about the axis X-X of the support 21, it is possible to adjust the position of the brush 23 so that it is positioned substantially parallel to the surface to be cleaned.

Moreover, it is possible also to adjust the distance between the brush 23 and the surface to be cleaned to ensure maximum cleaning efficacy without exerting excessive pressures thereon.

In fact, in the case in which the surface to be treated is the covering of a photovoltaic panel, excessive pressure could cause breakages thereof or cracks therein, compromising the seal and the reliability of this panel.

Usually, the weight of the brush and of the support 21 free from constraints is sufficient to exert an adequate pressure on the surface to be washed.

If necessary, it is possible to provide an actuator, gas or spring, interposed between the upright 19 and the support 21, designed to exert a further force on said support 21 to keep the brush in contact on the surface to be treated with a substantially constant force.

On said support 21 there is also provided a second spraying unit 30 comprising a rod with a plurality of nozzles 31 to which water under pressure is supplied, by means of a pump 5, to rinse the surface after washing.

Preferably, around the brush 23 there is provided a spray barrier 33 structured in such a way as to leave only the part of the brush that comes into contact with the surface free.

Use takes place as follows.

The operator operates the pumps 5 and 8, which mix the detergent with water, supply the wash liquid under pressure to the rod 9 for a softening action of the dirt and the rinse water to the rod 30.

By means of the gear motor 18 the operator translates the upright 19 along the axis Y-Y to bring the brush 23 to the height of the surface to be cleaned.

Subsequently, the operator actuates the winch 26 which, releasing the ropes 29, makes the brush 23, as a result of its weight alone, or also by means of an actuator, turn about the axis X-X moving from the substantially vertical idle position to a position inclined in relation to the ground and substantially parallel to the surface to be treated and in contact therewith.

Upon reaching the position, it is possible to operate the gear motor 25 which makes the brush 23 rotate to perform mechanical removal of the dirt.

At this point the vehicle is made to advance with the aid of a reference rod 32 which allows the operator to advance always remaining at the same distance from the surface.

Any positive variations in height or inclination can be compensated as a result of the flexibility of the ropes 29 which allow the brush to rotate freely toward the idle position.

In this way, there is no risk of exerting pressures which are excessive, and therefore potentially damaging, on the surface.

As a result of the present invention it is thus possible to produce a vehicle that enables operations to wash and clean inclined surfaces, such as photovoltaic panels of ground-mounted systems, to be performed automatically, reducing the labour required to a single operator.

As a result of the dual movement along the axes Y-Y and X-X, and of the inverted pendulum mounting of the brush it is possible always to keep the brush in the ideal position, i.e. substantially parallel to the surface to be cleaned, in the case of surfaces with different heights and inclinations in relation to the horizontal plane. Moreover, as a result of the positioning of the brush and of the various movement devices in the rear part of the vehicle, this has very limited lateral dimensions which allow easy manoeuvring even in limited spaces, such as those between the various rows of photovoltaic panels in a ground-mounted system.

The vehicle for cleaning inclined surfaces as described and illustrated, is susceptible to numerous modifications and variants all included in the scope of the inventive concept; moreover, all details can be substituted by other technically equivalent elements.

## Claims

1. A vehicle for cleaning inclined surfaces comprising a motor-driven frame (2), mounted on which is at least one tank (4, 7) containing a washing liquid, means (5, 9, 30) designed to spray said liquid against the surface to be cleaned and at least one rotary brush (23) for removing the dirt mechanically, **characterized in that** said brush is mounted in the rear part of the vehicle on a support (21) with the possibility of turning about an axis (X-X) parallel to the direction of advance of the vehicle from a substantially vertical non-operative position to an operative position with an inclination comprised between said substantially vertical position and a substantially horizontal position, there being provided means (26) designed to bring said brush from said non-operative position to said operative position, and vice versa.

2. The vehicle for cleaning inclined surfaces according to Claim 1, **characterized in that** said support (21) is hinged along said axis of rotation (X-X) on a pair of arms (20) fixed with respect to an upright (19) with the possibility of translating along a substantially vertical direction (Y-Y).

3. The vehicle for cleaning inclined surfaces according to Claim 2, **characterized in that** said support (21) is hinged on said arms (20) at a bottom end (21 ") so that its weight and that of the brush (23) enable their rotation from said non-operative position to said operative position.

4. The vehicle for cleaning inclined surfaces according to any one of the preceding claims, **characterized in that** said means designed to bring said brush from said non-operative position to said operative position and vice versa comprise a winch (26), which actuates at least one pulley (28) wound on which is at least one rope (29) constrained at the end to the support (21) of the brush (23).

5. The vehicle for cleaning inclined surfaces according to any one of the preceding Claims 2 to 4, **characterized in that** it envisages a frame (12), mounted on a vertical stem (14) of which is a sleeve (15) that is able to slide on said stem (14) along a substantially vertical axis (Y-Y), said upright (19) being connected on said sleeve, there being provided means (16, 17, 18) designed to translate said sleeve (15) and said upright along said substantially vertical axis (Y-Y).

6. The vehicle for cleaning inclined surfaces according to any one of the preceding Claims 2 to 5, **characterized in that** it envisages an actuator designed to exert a force on said support (21) to keep the brush (23) in contact on the surface to be cleaned with a substantially constant force.

7. The vehicle for cleaning inclined surfaces according to any one of the preceding claims, **characterized in that** means designed to spray said liquid against the surface to be cleaned comprise at least one pump (5) designed to supply the washing liquid under pressure from the tank (4) to a first rod (9) and to a second rod (30), which are positioned in the front part and rear part, respectively, of the vehicle and are provided with a plurality of nozzles for directing the liquid onto the surface to be cleaned.

8. The vehicle for cleaning inclined surfaces according to any one of the preceding claims, **characterized in that** it envisages a second tank (7) containing a detergent and a second pump (8) designed to dispense said detergent with the liquid contained in the first tank (4).

9. The vehicle for cleaning inclined surfaces according to Claim 5, **characterized in that** said frame (12) is mounted on guides in such a way as to be able to translate in a direction substantially perpendicular to that of advance of the vehicle.
